# EUROPÄISCHE PATENTSCHRIFT

(11) **EP 3 290 644 B1**
(45) Veröffentlichungstag und Bekanntmachung des Hinweises auf die Patenterteilung: **03.06.2020**
(21) Anmeldenummer: 17188315.0
(22) Anmeldetag: 29.08.2017
(51) Int. Cl.: F01D 9/04

(54) **GASTURBINE**
GAS TURBINE
TURBINE À GAZ

(30) Priorität: 31.08.2016 DE 102016116222
(43) Veröffentlichungstag der Anmeldung: 07.03.2018
(73) Patentinhaber: Rolls-Royce Deutschland Ltd & Co KG, 15827 Blankenfelde-Mahlow (DE)
(72) Erfinder: LEHMANN, Knut, 15827 Blankenfelde-Mahlow (DE); KERN, Christian, 15827 Blankenfelde-Mahlow (DE)
(74) Vertreter: Müller, Wolfram Hubertus

(56) Entgegenhaltungen:
- EP-A1- 0 616 111
- EP-A1- 1 741 877
- EP-A2- 1 801 356
- EP-A2- 1 921 292
- WO-A1-2004/038181
- US-A- 4 567 730

## Beschreibung

Die Erfindung betrifft eine Gasturbine gemäß dem Oberbegriff des Patentanspruchs 1.

Die Leitschaufeln eines Leitschaufelkranzes der Stufe 1 einer Hochdruckturbine, die der Brennkammer einer Gasturbine unmittelbar nachgeordnet sind, sind in besonderem Maße den Heißgasen der Brennkammer ausgesetzt und müssen an ihren Plattformen effektiv gekühlt werden. Eine Zufuhrmöglichkeit für Kühlluft stellt die Schnittstelle zwischen der Brennkammer und dem Leitschaufelkranz bereit. Dabei verhält es sich allerdings so, dass durch diese Schnittstelle zugeführte Kühlluft sich aufgrund axialer und radialer Relativbewegungen zwischen der Brennkammer und dem Leitschaufelkranz, die durch mechanische Belastungen und unterschiedliche Thermaldehnungen bedingt sind, mit dem Heißgasstrom der Brennkammer mischen kann, mit dem Nachteil einer Reduzierung der Kühlwirkung.

Aus der EP 0 615 055 B1 ist eine Leitschaufelkühlung bekannt, bei der Kühlluft durch Bohrungen in der äußeren Plattform des Leitschaufelkranzes zugeführt wird.

Aus der EP 1 801 356 A2 und der US 4 567 730 A sind gattungsgemäße Gasturbinen bekannt.

Die EP 1 741 877 A1 beschreibt eine Gasturbine mit einer Brennkammer und einem Turbinen-Leitschaufelkranz, der Leitschaufeln, eine äußere Plattform und eine innere Plattform aufweist. Die Brennkammer umfasst eine Brennkammerwand, an der Hitzeschindeln angeordnet sind. Die innere Plattform bildet eine Aussparung aus, in die ein Steg der Hitzeschindeln hineinragt. Weiter sind brennkammerseitig Kühlluftbohrungen vorgesehen, über die Kühlluft in einen Spalt eingeleitet wird, der zwischen der inneren Plattform und den Hitzeschindeln verläuft und dabei im Bereich der Aussparung endet.

Aus der EP 0 616 111 A1 ist eine Gasturbine mit einer Brennkammer und einem Turbinen-Leitschaufelkranz bekannt, der Leitschaufeln, eine äußere Plattform und eine innere Plattform umfasst. Dabei ist vorgesehen, dass Kühlluftöffnungen in einem schräg verlaufenden Wandabschnitt angeordnet sind.

Der Erfindung liegt die Aufgabe zu Grunde, eine Gasturbine bereitzustellen, die eine effektive Kühlung der Plattformen des Leitschaufelkranzes der Stufe 1 ermöglicht.

Diese Aufgabe wird durch eine Gasturbine mit den Merkmalen des Anspruchs 1 gelöst. Ausgestaltungen der Erfindung sind in den Unteransprüchen angegeben.

Danach betrifft die Erfindung eine Gasturbine, die in einem Hauptströmungspfad eine Brennkammer und einen der Brennkammer nachgeordneten segmentförmigen Turbinen-Leitschaufelkranz aufweist, wobei die Brennkammer eine äußere Brennkammerwand und eine innere Brennkammerwand umfasst, die zur Brennkammer hin mit Hitzeschindeln versehen sind, und der Turbinen-Leitschaufelkranz eine Mehrzahl von Leitschaufeln, eine äußere Plattform und eine innere Plattform aufweist.

Es ist vorgesehen, dass die äußere Plattform und/oder die innere Plattform zum Hauptströmungspfad eine radiale Stufe derart ausbildet, dass das stromaufseitige Ende der äußeren Plattform radial außen und stromaufseitig des stromabseitigen Endes der Hitzeschindeln der äußeren Brennkammerwand und/oder das stromaufseitige Ende der inneren Plattform radial innen und stromaufseitig des stromabseitigen Endes der Hitzeschindeln der inneren Brennkammerwand angeordnet ist, so dass die äußere Plattform und Hitzeschindeln der äußeren Brennkammerwand und/oder die innere Plattform und Hitzeschindeln der inneren Brennkammerwand sich in axialer Richtung überlappen. Weiter ist die Gasturbine derart ausgebildet, dass dem Leitschaufelkranz entlang der radialen Stufe der äußeren Plattform und/oder entlang der radialen Stufe der inneren Plattform Kühlluft zugeführt wird.

Die Erfindung sieht weiter vor, dass die radiale Stufe der äußeren Plattform und/oder die radiale Stufe der inneren Plattform einen ersten, einen zweiten und einen dritten Wandabschnitt aufweist, wobei der erste Wandabschnitt und der zweite Wandabschnitt radial und axial beabstandet sind und der dritte Wandabschnitt den ersten und den zweiten Wandabschnitt verbindet. Weiter verlaufen der erste und der zweite Wandabschnitt stärker in axialer Richtung als der dritte Wandabschnitt, der eine größere radiale Richtungskomponente aufweist und dementsprechend schräg zur axialen Richtung verläuft. Die radiale Stufe wird somit durch einen schräg verlaufenden Wandabschnitt gebildet, der zwei sich stärker in axialer Richtung erstreckende Wandabschnitte verbindet. Alle drei Wandabschnitte begrenzen die Plattform zum Hauptströmungspfad hin.

Dabei ist vorgesehen, dass die Übergänge zwischen dem ersten und dem dritten Wandabschnitt und zwischen dem dritten und dem zweiten Wandabschnitt ohne Kanten ausgebildet sind. Die einzelnen Wandabschnitte gehen somit sanft mit einer kontinuierlichen Oberflächenkrümmung ineinander über. Sie sind im mathematischen Sinne an jedem Punkt differenzierbar. Die radiale Stufe kann - wenn man einen Meridionalschnitt der Gasturbine betrachtet - auch als S-förmige Frontkontur der jeweiligen Plattform bezeichnet werden.

Es ist somit vorgesehen, die äußere Plattform und/oder die innere Plattform des Turbinen-Leitschaufelkranzes mit einer radialen Stufe auszubilden und mit dieser zwei Maßnahmen zu realisieren. Zum einen wird durch die radiale Stufe ein Überlappen von Plattform und Hitzeschindeln der angrenzenden Brennkammerwand ermöglicht und bereitgestellt. Dies bewirkt, dass die Schnittstelle zwischen der Brennkammer und dem Turbinen-Leitschaufelkranz besser vor dem Heißgasstrom der Brennkammer geschützt ist. Zum anderen ermöglicht die radiale Stufe ein effektives Zuführen von Kühlluft, da Kühlluft im Bereich der radialen Stufe und damit parallel zur Oberfläche der Plattform zugeführt werden kann. Ein solches Zuführen von Kühlluft parallel zur Oberfläche der Plattform bewirkt, dass die Kühlluft sich besonders effektiv an die Plattform zur Bereitstellung einer Filmkühlung anlegen kann. Die anliegende Kühlluft bleibt dann auch nach einem Umlenken an der Plattformoberfläche anliegend.

Der Begriff "radial" bezieht sich auf die Symmetrieachse bzw. Rotationsachse der Gasturbine. Wenn eine Komponente radial innen einer anderen Komponente angeordnet ist, so ist ihr radialer Abstand zur Symmetrieachse geringer als der der anderen Komponente. Wenn eine Komponente dagegen radial außen einer anderen Komponente angeordnet ist, so ist ihr radialer Abstand zur Symmetrieachse größer als der der anderen Komponente.

Der erste Wandabschnitt ist stromaufseitig des zweiten Wandabschnitts ausgebildet und weist ein stromaufseitiges Ende auf, das die stromaufseitige Begrenzung der äußeren Plattform und/oder der inneren Plattform darstellt. Der erste Wandabschnitt ist somit der axial vorderste Wandabschnitt.

Gemäß der Erfindung sind weiter Kühlluftöffnungen zur Bereitstellung von Kühlluft vorgesehen, die derart ausgerichtet sind, dass der äußeren Plattform und/oder der inneren Plattform Kühlluft im Wesentlichen parallel zu dem schräg verlaufenden Wandabschnitt und dabei angrenzend an den schräg verlaufenden Wandabschnitt zugeführt wird. Dabei kann vorgesehen sein, dass die Kühlluftöffnungen derart ausgerichtet sind, dass der Winkel zwischen ihrer Längsachse und einer Tangente an den schräg verlaufenden dritten Wandabschnitt, die senkrecht zur Umfangsrichtung verläuft, kleiner gleich 20 Grad, insbesondere kleiner gleich 10 Grad ist.

Kühlluft wird über die entsprechend ausgerichteten Kühlluftöffnungen somit im Wesentlichen parallel zum dritten, schräg verlaufenden Wandabschnitt zugeführt. Dies ermöglicht es, dass die Kühlluft sich an den schräg verlaufenden Wandabschnitt unter Ausbildung eines Kühlfilms sehr effektiv anlegen kann. Die einmal angelegte Kühlluft bleibt dann auch im Bereich des zweiten Wandabschnitts anliegend, der gegenüber dem dritten Wandabschnitt stärker axial verläuft. Dabei verhält es sich so, dass die Leitschaufeln im zweiten Wandabschnitt mit der Plattform verbunden sind. Es wird somit eine effektive Filmkühlung der Plattformoberflächen gegenüber dem aus der Brennkammer austretenden Heißgasstrom bereitgestellt.

Die Kühlluftöffnungen sind direkt in der äußeren Plattform und/oder der inneren Plattform ausgebildet sein. Gemäß der Erfindung sind die Kühlluftöffnungen im ersten Wandabschnitt und in diesem unmittelbar angrenzend an den dritten Wandabschnitt ausgebildet. Hierdurch wird sichergestellt, dass die Kühlluft direkt und dabei in paralleler Ausrichtung auf den dritten, schräg verlaufenden Wandabschnitt geblasen wird.

Eine weitere Ausgestaltung der Erfindung sieht vor, dass die Kühlluftöffnungen derart ausgebildet sind, dass sie an ihrer Eingangsseite im Querschnitt im Wesentlichen kreisförmig und an ihrer Ausgangsseite im Querschnitt in Umfangsrichtung länglich ausgebildet sind. Dies ermöglicht es, die Kühlluft statt als individuelle kreisförmige Kühljets als fast kontinuierliche flächige Strömung bereitzustellen, mit der die Plattform im Bereich der radialen Stufe beaufschlagt wird.

Auch kann vorgesehen sein, dass die Kühlluftöffnungen zur Ausgangsseite hin bezogen auf die Rotations- bzw. Maschinenachse in Umfangsrichtung divergent ausgebildet sind und/oder zur Ausgangsseite hin in einer Richtung normal zur Umfangsrichtung und normal zur Bohrungsachse konvergent ausgebildet sind. Hierdurch wird der Effekt, dass eine flächige Strömung entlang der radialen Stufe der Plattform bereitgestellt wird, noch verstärkt.

Gemäß einer Ausgestaltung der Erfindung ist vorgesehen, dass die äußere Plattform und/oder die innere Plattform stromabseitig des in axialer Richtung überlappenden Bereichs aufgrund der radialen Stufe sich zum Hauptströmungspfad hin verjüngen, so dass die Schindeln der äußeren Brennkammerwand und die äußere Plattform und/oder die Schindeln der inneren Brennkammerwand und die innere Plattform stromabseitig des in axialer Richtung überlappenden Bereichs miteinander fluchten. Auf diese Weise wird ein angepasster, sanfter Oberflächenverlauf der Hauptströmungspfadberandung im Übergang zwischen der Brennkammer und dem ersten Leitschaufelkranz der Hochdruckturbine bereitgestellt.

Es kann vorgesehen sein, dass die Hitzeschindeln an der äußeren Hauptströmungspfadberandung und/oder an der inneren Hauptströmungspfadberandung mit dem in axialer Richtung überlappenden Bereich einen Spalt zumindest teilweise überdecken, der sich zwischen der Brennkammer und dem Leitschaufelkranz radial erstreckt. Durch die axiale Überlappung von Hitzeschindeln und der angrenzend Plattform des Leitschaufelkranz werden Hohlräume zwischen der Brennkammer und dem Leitschaufelkranz besser abgedichtet und eine Vermischung der heißen Gase der Brennkammer mit Kühlluft, die über solche Hohlräume einströmt, reduziert.

Dabei kann vorgesehen sein, dass die Gasturbine im Bereich des Spaltes zwischen Brennkammergehäuse und Leitschaufelkranz eine Klappendichtung aufweist, die der Abdichtung des Spaltes dient und die über einen unterschiedlichen Druck einer zur Kühlung zugeführten Sekundärluft gegenüber dem Druck im Hauptströmungskanal in eine Dichtposition bewegbar ist.

Aus den obigen Erläuterungen ergibt sich, dass eine radiale Stufe, eine Überlappung von Plattform und Hitzeschindeln und die Zufuhr von Kühlluft entlang der radialen Stufe nicht notwendigerweise sowohl an der äußeren Plattform als auch an der inneren Plattform des Leitschaufelkranzes realisiert sein müssen. Beispielsweise sind diese erfindungsgemäßen Merkmale nur an der äußeren Plattform realisiert. Gleichwohl sieht eine Ausgestaltung der Erfindung vor, dass diese Merkmale sowohl an der äußeren Plattform als auch an der inneren Plattform realisiert sind. Dementsprechend ist für diesen Fall vorgesehen, dass sowohl die äußere Plattform und die Hitzeschindeln der äußeren Brennkammerwand als auch die innere Plattform und die Hitzeschindeln der inneren Brennkammerwand sich in axialer Richtung überlappen, wobei die äußere Plattform und die innere Plattform zum Hauptströmungspfad eine radiale Stufe ausbilden und wobei die Hitzeschindeln am stromabseitigen Ende der Brennkammer einen Ring bilden, der in eine radiale Öffnung des Leitschaufelkranzes hineinragt. Der Ring wird dabei durch die stromabseitigen Enden der Hitzeschindeln der äußeren Brennkammerwand und die stromabseitigen Enden der Hitzeschindeln der inneren Brennkammerwand gebildet, die radial beanstandet sind und zwischen sich einen Ringraum ausbilden.

Die Erfindung wird nachfolgend unter Bezugnahme auf die Figuren der Zeichnung anhand mehrerer Ausführungsbeispiele näher erläutert. Es zeigen:
- Figur 1: eine vereinfachte schematische Schnittdarstellung eines Turbofantriebwerks, in dem die vorliegende Erfindung realisierbar ist;
- Figur 2: eine Teilansicht eines Ausführungsbeispiels eines Leitschaufelkranzes der Stufe 1 eines Hochdruckverdichters, wobei der Leitschaufelkranz eine äußere und eine innere Plattform umfasst und die Plattformen im axial vorderen Bereich jeweils eine radiale Stufe ausbilden;
- Figur 3: eine dreidimensionale seitliche Darstellung eines Leitschaufelsegments des Leitschaufelkranzes der Figur 2;
- Figur 4: eine vergrößerte Darstellung der oberen Plattform des Leitschaufelsegments der Figur 3;
- Figur 5: eine dreidimensionale Darstellung der Kühlluftöffnungen, die in der oberen Plattform des Leitschaufelsegments gemäß den Figuren 3 und 4 ausgebildet sind; und
- Figur 6: das Turbinen-Leitschaufelsegment der Figur 3 in einer dreidimensionalen Ansicht schräg von vorne bzw. schräg zur axialen Richtung.

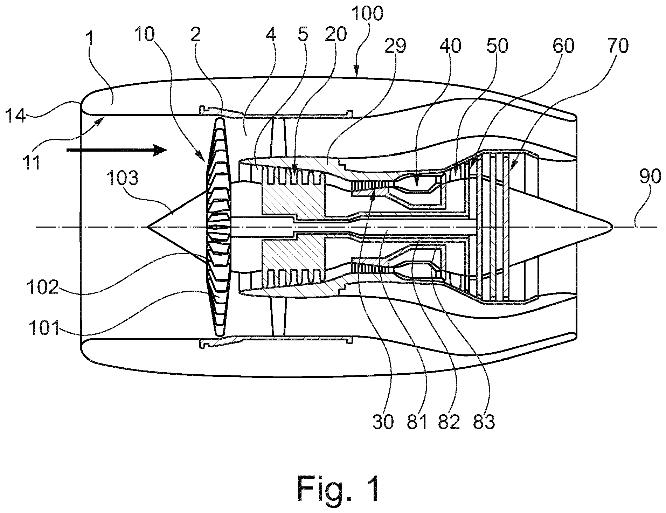

Die Figur 1 zeigt schematisch ein Turbofantriebwerk 100, das eine Fanstufe mit einem Fan 10 als Niederdruckverdichter, einen Mitteldruckverdichter 20, einen Hochdruckverdichter 30, eine Brennkammer 40, eine Hochdruckturbine 50, eine Mitteldruckturbine 60 und eine Niederdruckturbine 70 aufweist.

Der Mitteldruckverdichter 20 und der Hochdruckverdichter 30 weisen jeweils eine Mehrzahl von Verdichterstufen auf, die jeweils eine Rotorstufe und eine Statorstufe umfassen. Das Turbofantriebwerk 100 der Figur 1 weist des Weiteren drei separate Wellen auf, eine Niederdruckwelle 81, die die Niederdruckturbine 70 mit dem Fan 10 verbindet, eine Mitteldruckwelle 82, die die Mitteldruckturbine 60 mit dem Mitteldruckverdichter 20 verbindet und eine Hochdruckwelle 83, die die Hochdruckturbine 50 mit dem Hochdruckverdichter 30 verbindet. Dies ist jedoch lediglich beispielhaft zu verstehen. Wenn das Turbofantriebwerk beispielsweise keinen Mitteldruckverdichter und keine Mitteldruckturbine besitzt, wären nur eine Niederdruckwelle und eine Hochdruckwelle vorhanden.

Das Turbofantriebwerk 100 weist eine Triebwerksgondel 1 auf, die eine Einlauflippe 14 umfasst und innenseitig einen Triebwerkseinlauf 11 ausbildet, der einströmende Luft dem Fan 10 zuführt. Der Fan 10 weist eine Mehrzahl von Fan-Schaufeln 101 auf, die mit einer Fan-Scheibe 102 verbunden sind. Der Annulus der Fan-Scheibe 102 bildet dabei die radial innere Begrenzung des Strömungspfads durch den Fan 10. Radial außen wird der Strömungspfad durch ein Fangehäuse 2 begrenzt. Stromaufwärts der Fan-Scheibe 102 ist ein Nasenkonus 103 angeordnet.

Hinter dem Fan 10 bildet das Turbofantriebwerk 100 einen Sekundärstromkanal 4 und einen Primärstromkanal 5 aus. Der Primärstromkanal 5 führt durch das Kerntriebwerk (Gasturbine), das den Mitteldruckverdichter 20, den Hochdruckverdichter 30, die Brennkammer 40, die Hochdruckturbine 50, die Mitteldruckturbine 60 und die Niederdruckturbine 70 umfasst. Dabei sind der Mitteldruckverdichter 20 und der Hochdruckverdichter 30 von einem Umfangsgehäuse 29 umgeben, dass innenseitig eine Ringraumfläche bildet, die den Primärstromkanal 5 radial außen begrenzt. Radial innen ist der Primärstromkanal 5 durch entsprechende Kranzoberflächen der Rotoren und Statoren der jeweiligen Verdichterstufen bzw. durch die Nabe oder mit der Nabe verbundene Elemente der entsprechenden Antriebswelle begrenzt.

Im Betrieb des Turbofantriebwerks 100 durchströmt ein Primärstrom den Primärstromkanal 5 (nachfolgend auch als Hauptströmungskanal bezeichnet). Der Sekundärstromkanal 4, auch als Nebenstromkanal, Mantelstromkanal oder Bypass-Kanal bezeichnet, leitet im Betrieb des Turbofantriebwerks 100 vom Fan 10 angesaugte Luft am Kerntriebwerk vorbei.

Die beschriebenen Komponenten besitzen eine gemeinsame Rotations- bzw. Maschinenachse 90. Die Rotationsachse 90 definiert eine axiale Richtung des Turbofantriebwerks. Eine radiale Richtung des Turbofantriebwerks verläuft senkrecht zur axialen Richtung.

Im Kontext der vorliegenden Erfindung ist die Ausbildung der Schnittstelle zwischen der Brennkammer 40 und der Hochdruckturbine 50, insbesondere die Ausgestaltung des Leitschaufelkranzes der ersten Stufe der Hochdruckturbine 50 von Bedeutung.

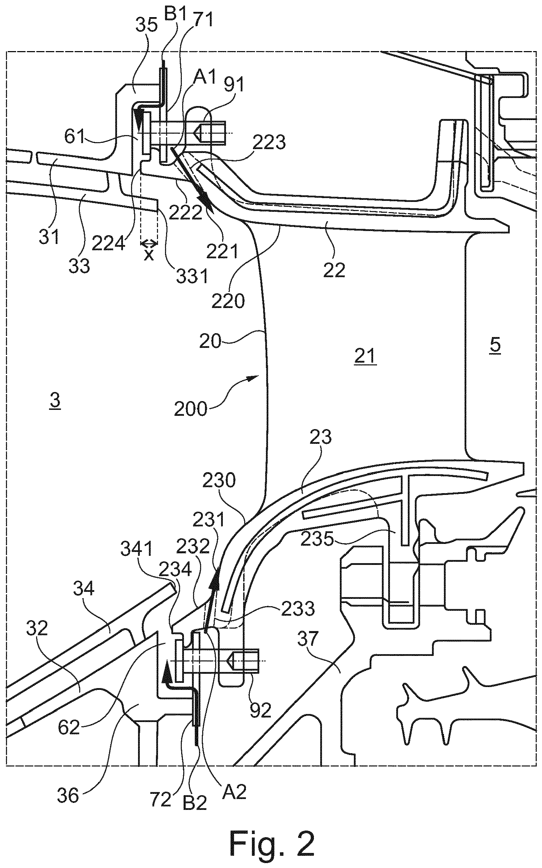

Die Figur 2 zeigt einen Teilabschnitt eines Hauptströmungspfads 5 durch eine Gasturbine, die Teil eines Flugtriebwerks ist. Der dargestellte Teilabschnitt zeigt den - bezogen auf die Strömungsrichtung - hinteren Abschnitt einer Brennkammer 3 und ein Turbinen-Leitschaufelsegment 20 eines der Brennkammer 3 unmittelbar nachgeordneten Turbinen-Leitschaufelkranzes 200. Der Turbinen-Leitschaufelkranz 200 ist segmentiert und umfasst eine Mehrzahl von Turbinen-Leitschaufelsegmenten 20, die in Umfangsrichtung nebeneinander angeordnet sind und dadurch den Turbinen-Leitschaufelkranz 200 der ersten Stufe der Hochdruckturbine bilden.

Die Brennkammer 3 umfasst eine äußere Brennkammerwand 31 und eine innere Brennkammerwand 32, wobei sich die Bezeichnungen "äußere" und "innere" auf den Hauptströmungspfad 5 beziehen, der durch das Kerntriebwerk verläuft. Zum Schutz vor dem Heißgasstrom der Brennkammer 3 ist die äußere Brennkammerwand 31 mit einer Mehrzahl von Hitzeschindeln 33 versehen, die sich an der äußeren Brennkammerwand 31 abstützen und an dieser beispielsweise über Bolzen (nicht dargestellt) befestigt sind. Bezogen auf das Brennkammerinnere sind die Hitzeschindeln 33 vor der äußeren Brennkammerwand 31 angeordnet. In entsprechender Weise ist auch die innere Brennkammerwand 32 mit einer Mehrzahl von Hitzeschindeln 34 versehen, die sich an der inneren Brennkammerwand 32 abstützen und an dieser beispielsweise über Bolzen (nicht dargestellt) befestigt sind. Bezogen auf das Brennkammerinnere sind sie vor der inneren Brennkammerwand 32 angeordnet.

Die äußere Brennkammerwand 31 bildet einen Teil eines äußeren Brennkammergehäuses, von dem eine weitere Wandstruktur 35 dargestellt ist. Das äußere Brennkammergehäuse umfasst weitere Wandstrukturen, die in der Figur 2 nicht dargestellt sind. Die innere Brennkammerwand 32 bildet einen Teil eines inneren Brennkammergehäuses, das ebenfalls weitere Wandstrukturen umfasst, von denen zwei weitere Wandstrukturen 36, 37 dargestellt sind.

Jedes Turbinen-Leitschaufelsegment 20 des Turbinen-Leitschaufelkranzes 200 umfasst mindestens eine Leitschaufel 21, eine äußere Plattform 22, die den Hauptströmungspfad 5 radial außen begrenzt und eine innere Plattform 23, die den Hauptströmungspfad 5 radial innen begrenzt. Die äußeren Plattformen 22 der Turbinen-Leitschaufelsegmente 20 und die inneren Plattformen 23 der Turbinen-Leitschaufelsegmente 20 bilden eine äußere Plattform und eine innere Plattform des Leitschaufelkranzes 200.

Ein Turbinen-Leitschaufelsegment 20 kann eine oder mehrere Leitschaufeln 21 umfassen, die in Umfangsrichtung beabstandet sind. Auch kann grundsätzlich vorgesehen sein, dass die Turbinen-Leitschaufelsegmente Leitschaufeln in Tandem-Bauweise aufweisen.

Die Turbinen-Leitschaufelsegmente 20 sind am inneren Brennkammergehäuse fixiert. Hierzu bildet die innere Plattform 23 eine sich im Wesentlichen radial erstreckende Wand 235 aus, die in einer Aussparung an der Wandstruktur 37 des inneren Brennkammergehäuses fixiert sind. Diese Art der Fixierung der Leitschaufelsegmente 20 ist dabei nur beispielhaft zu verstehen.

An der äußeren Plattform 22 bilden die Leitschaufelsegmente 20 und damit auch der Leitschaufelkranz 200 insgesamt im stromaufseitigen, der Brennkammer 3 zugewandten Bereich drei Wandabschnitte zum Hauptströmungspfad 5 aus, die den Hauptströmungspfad 5 radial außen begrenzen. So ist ein erster Wandabschnitt 222 vorgesehen, dessen stromaufseitiges Ende 224 die stromaufseitige Begrenzung des Leitschaufelsegments 20 im Bereich der oberen Plattform 22 darstellt. Ein zweiter Wandabschnitt 220 ist zum ersten Wandabschnitt 222 sowohl radial als auch axial beanstandet. Im Bereich des zweiten Wandabschnitts 220 ist die Leitschaufel 21 mit der äußeren Plattform 22 verbunden. Die Oberflächen des zweiten Wandabschnitts 220 sind direkt dem Heißgasstrom der Brennkammer 3 ausgesetzt.

Der erste Wandabschnitt 222 und der zweite Wandabschnitts 220 sind durch einen dritten Wandabschnitt 221 miteinander verbunden. Der erste Wandabschnitt 222 und der zweite Wandabschnitt 220 verlaufen zumindest näherungsweise in axialer Richtung. Der dritte Wandabschnitt 221 besitzt dagegen eine größere radiale Richtungskomponente, so dass er schräger zur axialen Richtung verläuft. Der erste Wandabschnitt 222 und der dritte Wandabschnitt 221 sind stromaufwärts der Vorderkanten der Leitschaufeln 21 ausgebildet. Der Übergang zwischen den einzelnen Wandabschnitten ist frei von Kanten. Vielmehr liegt ein sanfter Übergang zwischen den einzelnen Abschnitten 222, 221, 220 vor. Im mathematischen Sinne sind die Übergänge zwischen den Wandabschnitten 222, 221, 220 differenzierbar.

In entsprechender Weise bildet auch die innere Plattform 23 im axial vorderen, der Brennkammer 3 zugewandten Bereich drei Wandabschnitte zum Hauptströmungspfad 5 aus, die den Hauptströmungspfad radial innen begrenzen. Es ist ein erster Wandabschnitt 232 vorgesehen, dessen stromaufseitiges Ende 324 die stromaufseitige Begrenzung des Leitschaufelsegments 20 im Bereich der unteren Plattform 23 darstellt. Ein zweiter Wandabschnitt 230 ist zum ersten Wandabschnitt 232 sowohl radial als auch axial beanstandet. Im Bereich des zweiten Wandabschnitts 230 ist die Leitschaufel 21 mit der Plattform 23 verbunden.

Der erste Wandabschnitt 232 und der zweite Wandabschnitt 230 sind durch einen dritten Wandabschnitt 231 miteinander verbunden. Der erste Wandabschnitt 232 und der zweite Wandabschnitt 230 verlaufen zumindest näherungsweise in axialer Richtung. Der dritte Wandabschnitt 231 besitzt dagegen eine größere radiale Richtungskomponente, so dass er schräger zur axialen Richtung verläuft. Der erste Wandabschnitt 232 und der dritte Wandabschnitt 231 sind stromaufwärts der Vorderkanten der Leitschaufeln 21 ausgebildet. Der Übergang zwischen den einzelnen Wandabschnitten ist frei von Kanten. Es liegt ein sanfter Übergang zwischen den einzelnen Abschnitten 232, 231, 230 vor. Im mathematischen Sinne sind die Übergänge zwischen den Wandabschnitten 232, 231, 220 differenzierbar.

Durch die drei Wandabschnitte der äußeren Plattform 22 und der inneren Plattform 23 wird jeweils eine radiale Stufe realisiert insofern, als die Wandabschnitte 222, 220 und 232, 230 radial beanstandet sind. Dabei bilden die beiden ersten Wandabschnitte 222, 232 einen vergrößerten Öffnungsmund des Leitschaufelsegments 20 zur Brennkammer 3 hin aus.

Weiter ist vorgesehen, dass im Bereich der ersten Wandabschnitte 222, 232 Kühlluftöffnungen 223, 233 im ersten Wandabschnitt 222, 232 ausgebildet sind. Die Kühlluftöffnungen 223, 233 sind dabei unmittelbar angrenzend an den dritten Wandabschnitt 221, 231 im ersten Wandabschnitt 222, 232 ausgebildet. Sie sind derart ausgerichtet, dass Kühlluft, die über die Kühlluftöffnungen 223, 233 zugeführt wird, im Wesentlichen parallel zu dem schräg verlaufenden dritten Wandabschnitt 221, 231 und dabei angrenzend an diesen Wandabschnitt 221, 231 eingeblasen wird.

Die durch die Kühlluftöffnungen 223, 233 eingeblasene Kühlluft ist schematisch mit A1, A2 dargestellt.

Durch das Einblasen der Kühlluft parallel zu den dritten Wandabschnitten 221, 231 wird erreicht, dass sich die Kühlluft in effektiver Weise an die Wand angelegt und dort einen Kühlfilm bildet. Der anliegende Kühlfilm verbleibt dabei anliegend, wenn der Kühlfilm im Übergang zum zweiten Wandabschnitt 220, 230 seine Richtung ändert. Der Kühlfilm bewirkt eine thermische Abschirmung der Plattformen 22, 23 gegenüber dem aus der Brennkammer 3 austretenden Heißgasstrom.

Die Turbinen-Leitschaufelsegmente 20 sind in einer Gehäusestruktur eingehängt. Die Einhängung kann dabei grundsätzlich am Brennkammergehäuse oder am Außengehäuse der Hochdruckturbine erfolgen. In jedem Fall besteht eine Schnittstelle zwischen dem Leitschaufelsegment 20 und der Brennkammer 3. Diese Schnittstelle umfasst sowohl radial außen als auch radial innen einen sich im Wesentlichen in radialer Richtung erstreckenden Spalt 61, 62. So verläuft ein Spalt 61 zwischen der äußeren Plattform 22 des Leitschaufelsegments 20 und der Wandstruktur 35 des äußeren Brennkammergehäuses. Ebenfalls verläuft ein Spalt 62 zwischen der inneren Plattform 23 des Leitschaufelsegments 20 und der Wandstruktur 36 des inneren Brennkammergehäuses. Die Spalte 61, 62 sind durch die Aufhängung der Leitschaufelsegmente 20 verursacht und notwendig zur Kompensierung von Relativbewegungen und auftretender Toleranzen.

Es ist zu verhindern, dass in den Spalt 61, 62 Heißgase der Brennkammer 3 eintreten können. Um dies zu vermeiden, kann ein weiterer Kühlluftstrom B1, B2 bereitgestellt werden, der in Figur 2 schematisch dargestellt ist. Des Weiteren kann eine Klappendichtung mit Klappen 71, 72 und Haltebolzen 91, 92 vorgesehen sein, die der Abdichtung des Spalts 61, 62 dient, wobei die Klappen 71, 72 über einen unterschiedlichen Druck im Hauptströmungspfad 5 und im weiteren Kühlluftstrom B1, B2 in eine Dichtposition kippbar sind.

Aufgrund der Ausbildung der äußeren Plattform 22 mit einer radialen Stufe am stromaufseitigen Ende ermöglicht die vorliegende Erfindung eine weitere Maßnahme, die den Eintritt von Heißgasen aus der Brennkammer 3 in den jeweiligen Spalt 61, 62 verhindert. So ist vorgesehen, dass das stromaufseitige Ende 224 der äußeren Plattform 22 radial außen und stromaufseitig des stromabseitigen Endes 231 der Hitzeschindeln 33 der äußeren Brennkammerwand 31 angeordnet ist. Die Hitzeschindeln 33, 34 begrenzen dabei den Hauptströmungspfad im Bereich der Brennkammer 3.

Des Weiteren kann vorgesehen sein, dass das stromaufseitige Ende 234 der inneren Plattform 23 radial innen und stromaufseitig des stromabseitigen Endes 241 der Hitzeschindeln 34 der inneren Brennkammerwand 32 angeordnet ist.

Dies führt dazu, dass die äußere Plattform 22 - nämlich deren erster Wandabschnitt 222 - und die Hitzeschindeln 33 der äußeren Brennkammerwand 31 sich in axialer Richtung überlappen. Dies ist in der Figur 2 schematisch dargestellt. Die axiale Überlappung ist mit x angegeben. Des Weiteren überlappen sich die innere Plattform 23 - nämlich deren erster Wandabschnitt 232 - und die Hitzeschindeln 34 der inneren Brennkammerwand 32 in axialer Richtung. Durch die axiale Überlappung wird verhindert oder erfolgt zumindest in nur reduziertem Maße, dass Heißgase der Brennkammer 3 in den jeweiligen Spalt 61, 62 strömen können.

Das Leitschaufelsegment 20 bildet somit stromaufwärts eine vergrößerte Eingangsöffnung durch die ersten Wandabschnitte 222, 232 aus, in die die Hitzeschindeln 33, 34 unter Ausbildung einer axialen Überlappung x hineinragen. Die Hitzeschindeln 33, 34 bilden dabei mit ihren stromabseitigen Ende 331, 341 die Austrittsöffnung der Brennkammer 3.

Die erläuterte axiale Überlappung kann nur im Bereich der oberen Plattform 22, nur im Bereich der unteren Plattform 23 oder im Bereich beider Plattformen 22, 23 realisiert sein.

Es wird darauf hingewiesen, dass aufgrund der Verjüngung der äußeren Plattform 22 zum Hauptströmungspfad 5 hin, die durch die durch die Wandabschnitte 222, 221, 220 gebildete radiale Stufe bewirkt ist, erreicht wird, dass die Hitzeschindeln 33 und die äußere Plattform 22, nämlich der zweite Wandabschnitt 220 miteinander fluchten. Stromabseitig des Überlappungsbereichs x ist die radial äußere Berandung des Hauptströmungspfads 5 somit mit einem angepassten, sanften Oberflächenverlauf versehen, der frei von radialen Sprüngen ist. Je größer die Überlappung ist, desto größer ist dabei die Homogenität der Hauptströmungspfadberandung und desto weniger können Heißgase in den Spalt 61 gelangen.

Entsprechendes gilt für die Berandung des Hauptströmungspfads 5 an der radial inneren Plattform 23.

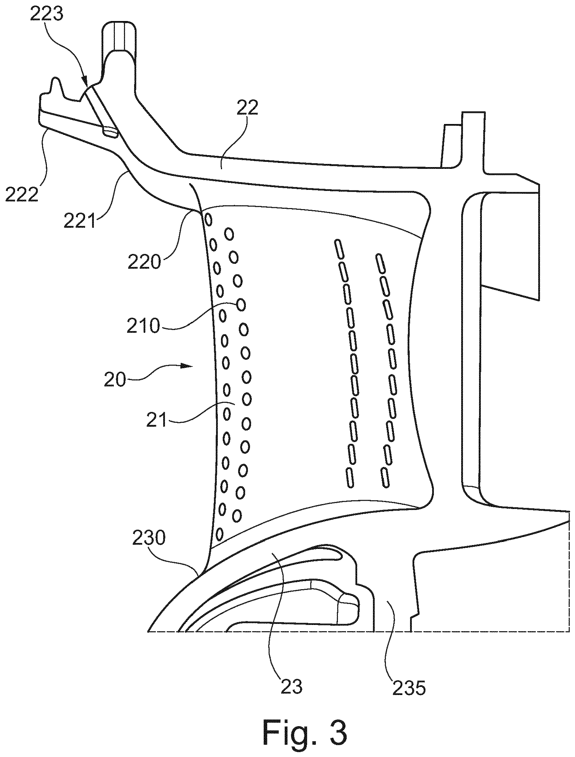

In der dreidimensionalen Darstellung der Figur 3 eines Turbinen-Leitschaufelsegment 20 sind die äußere Plattform 22, die Wandabschnitte 222, 221, 220 und die Kühlluftöffnungen 223 zu erkennen, die parallel zu dem dritten (mittleren) Wandabschnitt 221 ausgerichtet und dabei im ersten Wandabschnitt 222 unmittelbar angrenzend an den dritten Wandabschnitt 221 ausgebildet sind.

Von der inneren Plattform 23 ist nur der zweite Wandabschnitt 230 sowie die sich radial erstreckende Wand 235 dargestellt. Zusätzlich zur Darstellung der Figur 2 sind Kühlluftöffnungen 210 der Leitschaufel 20 dargestellt. Diese spielen im Kontext der vorliegenden Erfindung jedoch keine Rolle.

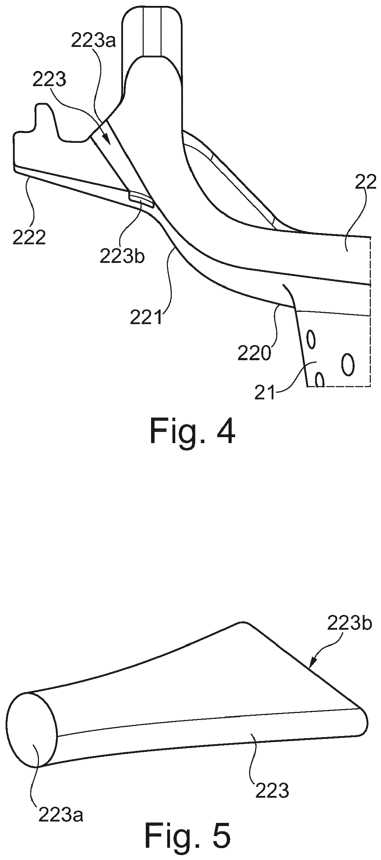

Die Figur 4 ist eine vergrößerte Darstellung des stromaufseitigen Endes der äußeren Plattform 22 eines Turbinen-Leitschaufelsegment gemäß den Figuren 2 und 3. Es sind wiederum die Wandabschnitte 222, 221, 220 und die Kühlluftöffnungen 223 zu erkennen, die parallel zu dem dritten Wandabschnitt 221 ausgerichtet und dabei im ersten Wandabschnitt 222 unmittelbar angrenzend an den dritten Wandabschnitt 221 ausgebildet sind. Die Kühlluftöffnungen 223 weisen eine Eingangsseite 223a und eine Ausgangsseite 223b auf.

Dabei kann vorgesehen sein, dass sich die Kühlluftöffnungen 223 zwischen der Eingangsseite 223a und der Ausgangsseite 223b entsprechend der Ausgestaltung der Figur 5 erstrecken. Danach weist eine Kühlluftöffnung 223 an ihrer Eingangsseite 223a einen im wesentlichen kreisförmigen Querschnitt auf. Dieser ändert sich in Richtung der Ausgangsseite 223b zu einem länglichen Querschnitt. Gleichzeitig divergiert die Kühlluftöffnung 223 zur Ausgangsseite 223b in Umfangsrichtung. In einer Richtung normal zur Umfangsrichtung und normal zur Bohrungsachse konvertiert die Kühlluftöffnung 223 zur Ausgangsseite 223b hin. Hierdurch wird erreicht, dass der dritte Wandabschnitts 221 mit einer im Umfangsrichtung im Wesentlichen kontinuierlichen und dabei flächigen Strömung beaufschlagt wird. Dies stellt sicher, dass sich an alle Oberflächen des dritten Wandabschnitts 221 ein Kühlfilm anlegt.

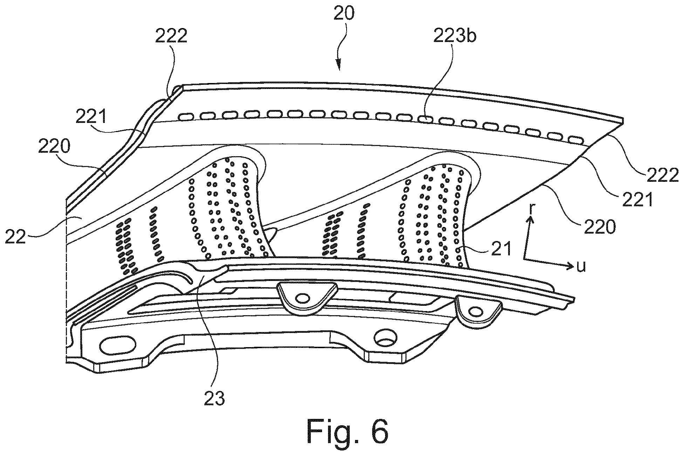

Die Figur 6 zeigt ein Turbinen-Leitschaufelsegment 20 in einer perspektivischen Darstellung schräg von vorne. Das dargestellte Leitschaufelsegment 20 weist zwei Leitschaufel 21 auf. Im Bereich der äußeren Plattform 22 sind die Ausgangsseiten 223b der Kühlluftöffnungen zu erkennen, die unmittelbar angrenzend an den dritten, schräg verlaufenden Wandabschnitt 221 ausgebildet sind, der den ersten Wandabschnitt 222 und den zweiten Wandabschnitt 220 miteinander verbindet.

Die vorliegende Erfindung beschränkt sich in ihrer Ausgestaltung nicht auf die vorstehend beschriebenen Ausführungsbeispiele. Beispielsweise können zusätzliche Kühlluftöffnungen zur Kühlung der äußeren Plattform und der inneren Plattform der Leitschaufelsegmente vorgesehen sein. Auch wird darauf hingewiesen, dass in alternativen, nicht dargestellten Ausführungsbeispielen nur die äußere Plattform 22 oder nur die innere Plattform 23 mit drei Wandabschnitten, die eine radiale Stufe bilden, versehen ist.

Auch wird darauf hingewiesen, dass die Merkmale der einzelnen beschriebenen Ausführungsbeispiele der Erfindung in verschiedenen Kombinationen miteinander kombiniert werden können. Sofern Bereiche definiert sind, so umfassen diese sämtliche Werte innerhalb dieser Bereiche sowie sämtliche Teilbereiche, die in einen Bereich fallen.

## Patentansprüche

1. Gasturbine, die in einem Hauptströmungspfad aufweist:
- eine Brennkammer (3), die eine äußere Brennkammerwand (31) und eine innere Brennkammerwand (32) umfasst, die zur Brennkammer (3) hin mit Hitzeschindeln (33, 34) versehen sind, und
- einen der Brennkammer (3) nachgeordneten segmentförmigen Turbinen-Leitschaufelkranz (200), der eine Mehrzahl von Leitschaufeln (21), eine äußere Plattform (22) und eine innere Plattform (23) umfasst, wobei
- die äußere Plattform (22) und/oder die innere Plattform (23) zum Hauptströmungspfad (4) eine radiale Stufe (222, 221, 220; 232, 231, 230) ausbildet derart, dass das stromaufseitige Ende (224) der äußeren Plattform (22) radial außen und stromaufseitig des stromabseitigen Endes (331) der Hitzeschindeln (33) der äußeren Brennkammerwand (31) und/oder das stromaufseitige Ende (234) der inneren Plattform (23) radial innen und stromaufseitig des stromabseitigen Endes (341) der Hitzeschindeln (34) der inneren Brennkammerwand (32) angeordnet ist, so dass die äußere Plattform (22) und Hitzeschindeln (33) der äußeren Brennkammerwand (31) und/oder die innere Plattform (23) und Hitzeschindeln (34) der inneren Brennkammerwand (32) sich in axialer Richtung überlappen, und
- die Gasturbine derart ausgebildet ist, dass dem Leitschaufelkranz (200) entlang der radialen Stufe (222, 221, 220) der äußeren Plattform (22) und/oder entlang der radialen Stufe (232, 231, 230) der inneren Plattform (23) Kühlluft zugeführt wird, wobei
- die radiale Stufe der äußeren Plattform (22) und/oder die radiale Stufe der inneren Plattform (23) einen ersten, einen zweiten und einen dritten Wandabschnitt (222, 221, 220; 232, 231, 230) aufweist, wobei der erste Wandabschnitt (222, 232) und der zweite Wandabschnitt (220, 230) radial und axial beabstandet sind, der dritte Wandabschnitt (221, 231) den ersten Wandabschnitt (222, 232) und den zweiten Wandabschnitt (220, 230) verbindet und der erste und der zweite Wandabschnitt stärker in axialer Richtung verlaufen als der dritte Wandabschnitt (221, 231), der eine größere radiale Richtungskomponente aufweist und schräg zur axialen Richtung verläuft, wobei die Übergänge zwischen dem ersten und dem dritten Wandabschnitt und zwischen dem dritten und dem zweiten Wandabschnitt ohne Kanten ausgebildet sind,
- und wobei der erste Wandabschnitt (222, 232) stromaufseitig des zweiten Wandabschnitts (220, 230) ausgebildet ist und ein stromaufseitiges Ende (224, 234) aufweist, das die stromaufseitige Begrenzung der äußeren Plattform (22) oder der inneren Plattform (23) darstellt,
**dadurch gekennzeichnet, dass**
- in der äußeren Plattform (22) und/oder der inneren Plattform (23) Kühlluftöffnungen (223, 233) ausgebildet sind, die derart ausgerichtet sind, dass der äußeren Plattform (22) und/oder der inneren Plattform (23) Kühlluft im Wesentlichen parallel zu dem dritten, schräg verlaufenden Wandabschnitt (221, 231) und dabei angrenzend an den dritten Wandabschnitt (221, 231) zugeführt wird, und
- die Kühlluftöffnungen (223, 233) im ersten Wandabschnitt (222, 232) und in diesem unmittelbar angrenzend an den dritten Wandabschnitt (221, 231) ausgebildet sind.

2. Gasturbine nach Anspruch 1, **dadurch gekennzeichnet, dass** die Kühlluftöffnungen (223, 233) derart ausgerichtet sind, dass der Winkel zwischen ihrer Längsachse und einer senkrecht zur Umfangsrichtung verlaufenden Tangente an den schräg verlaufenden dritten Wandabschnitt (221, 231) kleiner gleich 20 Grad, insbesondere kleiner gleich 10 Grad ist.

3. Gasturbine nach einem der vorangehenden Ansprüche, **dadurch gekennzeichnet, dass** die Kühlluftöffnungen (223) derart ausgebildet sind, dass sie an ihrer Eingangsseite (223a) im Querschnitt im Wesentlichen kreisförmig und an ihrer Ausgangsseite (223b) im Querschnitt länglich ausgebildet sind.

4. Gasturbine nach einem der vorangehenden Ansprüche, **dadurch gekennzeichnet, dass** die Kühlluftöffnungen (223) zur Ausgangsseite (223b) hin bezogen auf die Rotationsachse in Umfangsrichtung divergent ausgebildet sind.

5. Gasturbine nach einem der vorangehenden Ansprüche, **dadurch gekennzeichnet, dass** die Kühlluftöffnungen (223) zur Ausgangsseite (223b) hin in einer Richtung normal zur Umfangsrichtung und normal zur Bohrungsachse konvergent ausgebildet sind.

6. Gasturbine nach einem der vorangehenden Ansprüche, **dadurch gekennzeichnet, dass** die äußere Plattform (22) und/oder die innere Plattform (23) stromabseitig des in axialer Richtung überlappenden Bereichs aufgrund der radialen Stufe (222, 221, 220; 232, 231, 230) sich zum Hauptströmungspfad (5) hin verjüngen, so dass die Hitzeschindeln (33) der äußeren Brennkammerwand (31) und die äußere Plattform (22) und/oder die Hitzeschindeln (34) der inneren Brennkammerwand (32) und die innere Plattform (23) stromabseitig des in axialer Richtung überlappenden Bereichs miteinander fluchten.

7. Gasturbine nach einem der vorangehenden Ansprüchen, **dadurch gekennzeichnet, dass** die Hitzeschindeln (33, 34) an der äußeren Hauptströmungspfadberandung und/oder an der inneren Hauptströmungspfadberandung mit dem in axialer Richtung überlappenden Bereich einen Spalt (61, 62) zumindest teilweise axial überdecken, der sich zwischen der Brennkammer (3) und dem Leitschaufelkranz (200) radial erstreckt.

8. Gasturbine nach Anspruch 7, **dadurch gekennzeichnet, dass** die Gasturbine im Bereich des Spaltes (61, 62) eine Klappendichtung (71, 72) aufweist, die der Abdichtung des Spaltes (61, 62) dient und die über einen unterschiedlichen Druck einer zur Kühlung zugeführten Sekundärluft gegenüber dem Druck im Hauptströmungskanal in eine Dichtposition bewegbar ist.

9. Gasturbine nach einem der vorangehenden Ansprüche, **dadurch gekennzeichnet, dass** sowohl die äußere Plattform (22) und die Hitzeschindeln (33) der äußeren Brennkammerwand (31) als auch die innere Plattform (23) und die Hitzeschindeln (34) der inneren Brennkammerwand (32) sich in axialer Richtung überlappen, wobei sowohl die äußere Plattform (22) als auch die innere Plattform (23) zum Hauptströmungspfad (5) eine radiale Stufe (222, 221, 220; 232, 231, 230) ausbilden, und wobei die Hitzeschindeln (33, 34) am stromabseitigen Ende der Brennkammer (3) einen Ring bilden, der in eine radiale Öffnung des Leitschaufelkranzes (200) hineinragt.

## Claims

1. Gas turbine which has, in a main flow path:
- a combustion chamber (3) which comprises an outer combustion chamber wall (31) and an inner combustion chamber wall (32) which are equipped, in the direction of the combustion chamber (3), with heat-shielding shingles (33, 34), and
- a segmented turbine guide blade ring (200) which is positioned downstream of the combustion chamber (3) and which comprises a multiplicity of guide blades (21), an outer platform (22) and an inner platform (23), wherein
- the outer platform (22) and/or the inner platform (23) forms a radial step (222, 221, 220; 232, 231, 230) in relation to the main flow path (4) such that the upstream end (224) of the outer platform (22) is arranged radially to the outside and upstream of the downstream end (331) of the heat-shielding shingles (33) of the outer combustion chamber wall (31) and/or the upstream end (234) of the inner platform (23) is arranged radially to the inside and upstream of the downstream end (341) of the heat-shielding shingles (34) of the inner combustion chamber wall (32), such that the outer platform (22) and heat-shielding shingles (33) of the outer combustion chamber wall (31) and/or the inner platform (23) and heat-shielding shingles (34) of the inner combustion chamber wall (32) overlap in an axial direction, and
- the gas turbine is designed such that cooling air is fed to the guide blade ring (200) along the radial step (222, 221, 220) of the outer platform (22) and/or along the radial step (232, 231, 230) of the inner platform (23), wherein
- the radial step of the outer platform (22) and/or the radial step of the inner platform (23) has a first, a second and a third wall portion (222, 221, 220; 232, 231, 230), wherein the first wall portion (222, 232) and the second wall portion (220, 230) are radially and axially spaced apart, the third wall portion (221, 231) connects the first wall portion (222, 232) and the second wall portion (220, 230), and the first and the second wall portion run in an axial direction to a greater degree than the third wall portion (221, 231), which has a greater radial directional component and runs obliquely with respect to the axial direction, wherein the transitions between the first and the third wall portion and between the third and the second wall portion are formed without edges,
- and wherein the first wall portion (222, 232) is formed upstream of the second wall portion (220, 230) and has an upstream end (224, 234) which constitutes the upstream delimitation of the outer platform (22) or of the inner platform (23),
**characterized in that**
- in the outer platform (22) and/or in the inner platform (23), there are formed cooling air openings (223, 233) which are oriented such that cooling air is fed to the outer platform (22) and/or to the inner platform (23) substantially parallel to the third, obliquely running wall portion (221, 231) and at the same time adjacently to the third wall portion (221, 231), and
- the cooling air openings (223, 233) are formed in the first wall portion (222, 232) and in the latter directly adjacent to the third wall portion (221, 231).

2. Gas turbine according to Claim 1, **characterized in that** the cooling air openings (223, 233) are oriented such that the angle between the longitudinal axis and a tangent to the obliquely running third wall portion (221, 231), which tangent runs perpendicular to the circumferential direction, is less than or equal to 20 degrees, in particular less than or equal to 10 degrees.

3. Gas turbine according to any of the preceding claims, **characterized in that** the cooling air openings (223) are designed such that they are of substantially circular cross section at their inlet side (223a) and are of substantially elongate cross section at their outlet side (223b).

4. Gas turbine according to any of the preceding claims, **characterized in that** the cooling air openings (223) are designed to diverge towards the outlet side (223b) in a circumferential direction in relation to the axis of rotation.

5. Gas turbine according to any of the preceding claims, **characterized in that** the cooling air openings (223) are designed to converge towards the outlet side (223b) in a direction normal to the circumferential direction and normal to the bore axis.

6. Gas turbine according to any of the preceding claims, **characterized in that** the outer platform (22) and/or the inner platform (23), downstream of the region which overlaps in the axial direction, narrow toward the main flow path (5) owing to the radial step (222, 221, 220; 232, 231, 230), such that the heat-shielding shingles (33) of the outer combustion chamber wall (31) and the outer platform (22) and/or the heat-shielding shingles (34) of the inner combustion chamber wall (32) and the inner platform (23) are in alignment with one another downstream of the region which overlaps in the axial direction.

7. Gas turbine according to any of the preceding claims, **characterized in that** the heat-shielding shingles (33, 34) at the outer main flow path boundary and/or at the inner main flow path boundary at least partially axially cover, by means of the region which overlaps in the axial direction, a gap (61, 62) which extends radially between the combustion chamber (3) and the guide blade ring (200) .

8. Gas turbine according to Claim 7, **characterized in that** the gas turbine has, in the region of the gap (61, 62), a flap seal (71, 72) which serves for sealing off the gap (61, 62) and which is movable into a sealing position by means of a differing pressure of secondary air fed for cooling purposes in relation to the pressure in the main flow channel.

9. Gas turbine according to any of the preceding claims, **characterized in that** both the outer platform (22) and the heat-shielding shingles (33) of the outer combustion chamber wall (31) and also the inner platform (23) and the heat-shielding shingles (34) of the inner combustion chamber wall (32) overlap in the axial direction, wherein both the outer platform (22) and the inner platform (23) form a radial step (222, 221, 220; 232, 231, 230) in relation to the main flow path (5), and wherein the heat-shielding shingles (33, 34) form, at the downstream end of the combustion chamber (3), a ring which projects into a radial opening of the guide blade ring (200).

## Revendications

1. Turbine à gaz, qui comprend, dans une voie d'écoulement principale :
- une chambre de combustion (3) qui comporte une paroi extérieure de chambre de combustion (31) et une paroi intérieure de chambre de combustion (32) qui sont dotées d'écrans thermiques (33, 34) en direction de la chambre de combustion (3), et
- une couronne d'aubes directrices de turbine (200) en forme de segments placée en aval de la chambre de combustion (3), laquelle couronne comporte une pluralité d'aubes directrices (21), une plate-forme extérieure (22) et une plate-forme intérieure (23), dans laquelle
- la plate-forme extérieure (22) et/ou la plate-forme intérieure (23) forment un gradin radial (222, 221, 220 ; 232, 231, 230) par rapport à la voie d'écoulement principale (4), de telle sorte que l'extrémité amont (224) de la plate-forme extérieure (22) soit disposée radialement à l'extérieur et en amont de l'extrémité aval (331) des écrans thermiques (33) de la paroi extérieure de chambre de combustion (31) et/ou que l'extrémité amont (234) de la plate-forme intérieure (23) soit disposée radialement à l'intérieur et en amont de l'extrémité aval (341) des écrans thermiques (34) de la paroi intérieure de chambre de combustion (32), de sorte que la plate-forme extérieure (22) et des écrans thermiques (33) de la paroi extérieure de chambre de combustion (31) et/ou la plate-forme intérieure (23) et des écrans thermiques (34) de la paroi intérieure de chambre de combustion (32) se chevauchent dans la direction axiale, et
- la turbine à gaz est formée de telle sorte que de l'air de refroidissement est acheminé à la couronne d'aubes directrices (200) le long du gradin radial (222, 221, 220) de la plate-forme extérieure (22) et/ou le long du gradin radial (232, 231, 230) de la plate-forme intérieure (23), dans laquelle
- le gradin radial de la plate-forme extérieure (22) et/ou le gradin radial de la plate-forme intérieure (23) comprennent une première, une deuxième et une troisième partie de paroi (222, 221, 220 ; 232, 231, 230), dans laquelle la première partie de paroi (222, 232) et la deuxième partie de paroi (220, 230) sont espacées radialement et axialement, la troisième partie de paroi (221, 231) relie la première partie de paroi (222, 232) et la deuxième partie de paroi (220, 230) et la première et la deuxième partie de paroi s'étendent de manière plus prononcée dans la direction axiale que la troisième partie de paroi (221, 231), qui présente une composante directionnelle radiale plus grande et s'étend de manière inclinée par rapport à la direction axiale, dans laquelle les transitions entre la première et la troisième partie de paroi et entre la troisième et la deuxième partie de paroi sont formées sans arêtes,
- et dans laquelle la première partie de paroi (222, 232) est formée en amont de la deuxième partie de paroi (220, 230) et comprend une extrémité amont (224, 234) qui constitue la limite amont de la plate-forme extérieure (22) ou de la plate-forme intérieure (23),
**caractérisée en ce que**
- des ouvertures pour air de refroidissement (223, 233) sont formées dans la plate-forme extérieure (22) et/ou la plate-forme intérieure (23), lesquelles ouvertures sont orientées de telle sorte que de l'air de refroidissement soit acheminé à la plate-forme extérieure (22) et/ou à la plate-forme intérieure (23) sensiblement parallèlement à la troisième partie de paroi (221, 231) s'étendant de manière inclinée et en l'occurrence de manière adjacente à la troisième partie de paroi (221, 231), et
- les ouvertures pour air de refroidissement (223, 233) sont formées dans la première partie de paroi (222, 232) et dans celle-ci de manière directement adjacente à la troisième partie de paroi (221, 231).

2. Turbine à gaz selon la revendication 1, **caractérisée en ce que** les ouvertures pour air de refroidissement (223, 233) sont orientées de telle sorte que l'angle entre leur axe longitudinal et une tangente à la troisième partie de paroi (221, 231) s'étendant de manière inclinée, laquelle tangente s'étend perpendiculairement à la direction périphérique, est inférieur ou égal à 20 degrés, en particulier inférieur ou égal à 10 degrés.

3. Turbine à gaz selon l'une des revendications précédentes, **caractérisée en ce que** les ouvertures pour air de refroidissement (223) sont formées de telle sorte qu'elles sont sensiblement circulaires en section transversale au niveau de leur côté d'entrée (223a) et sont formées de manière allongée en section transversale au niveau de leur côté de sortie (223b).

4. Turbine à gaz selon l'une des revendications précédentes, **caractérisée en ce que** les ouvertures pour air de refroidissement (223) sont formées de manière divergente vers le côté de sortie (223b) dans la direction périphérique par rapport à l'axe de rotation.

5. Turbine à gaz selon l'une des revendications précédentes, **caractérisée en ce que** les ouvertures pour air de refroidissement (223) sont formées de manière convergente vers le côté de sortie (223b) dans une direction normale à la direction périphérique et normale à l'axe d'alésage.

6. Turbine à gaz selon l'une des revendications précédentes, **caractérisée en ce que** la plate-forme extérieure (22) et/ou la plate-forme intérieure (23) s'amincissent en direction de la voie d'écoulement principale (5) en aval de la région de chevauchement dans la direction axiale en raison du gradin radial (222, 221, 220 ; 232, 231, 230), de sorte que les écrans thermiques (33) de la paroi extérieure de chambre de combustion (31) et la plate-forme extérieure (22) et/ou les écrans thermiques (34) de la paroi intérieure de chambre de combustion (32) et la plate-forme intérieure (23) soient en alignement les uns avec les autres en aval de la région de chevauchement dans la direction axiale.

7. Turbine à gaz selon l'une des revendications précédentes, **caractérisée en ce que** les écrans thermiques (33, 34) au niveau de la bordure extérieure de voie d'écoulement principale et/ou au niveau de la bordure intérieure de voie d'écoulement principale chevauchent au moins partiellement axialement, par la région de chevauchement dans la direction axiale, un interstice (61, 62) qui s'étend entre la chambre de combustion (3) et la couronne d'aubes directrices (200).

8. Turbine à gaz selon la revendication 7, **caractérisée en ce que** la turbine à gaz comprend, dans la région de l'interstice (61, 62), un joint d'étanchéité à clapet (71, 72) qui sert à réaliser l'étanchéité de l'interstice (61, 62) et qui est déplaçable dans une position d'étanchéité par le biais d'une pression différente d'un air secondaire acheminé pour le refroidissement par rapport à la pression dans le canal d'écoulement principal.

9. Turbine à gaz selon l'une des revendications précédentes, **caractérisée en ce qu'**à la fois la plate-forme extérieure (22) et les écrans thermiques (33) de la paroi extérieure de chambre de combustion (31) et aussi la plate-forme intérieure (23) et les écrans thermiques (34) de la paroi intérieure de chambre de combustion (32) se chevauchent dans la direction axiale, à la fois la plate-forme extérieure (22) et la plate-forme intérieure (23) formant par rapport à la voie d'écoulement principale (5) un gradin radial (222, 221, 220 ; 232, 231, 230), et les écrans thermiques (33, 34) formant un anneau à l'extrémité aval de la chambre de combustion (3), lequel pénètre dans une ouverture radiale de la couronne d'aubes directrices (200).
